(19) **Europäisches Patentamt**
**European Patent Office**
**Office européen des brevets**

(11) **EP 4 315 167 B1**

(12) **EUROPEAN PATENT SPECIFICATION**

(45) Date of publication and mention
of the grant of the patent:
**16.04.2025 Bulletin 2025/16**

(21) Application number: **22716833.3**

(22) Date of filing: **25.03.2022**

(51) International Patent Classification (IPC):
**G06N 3/045** (2023.01)   **G06N 3/084** (2023.01)
**G06F 17/15** (2006.01)

(52) Cooperative Patent Classification (CPC):
**G06N 3/045; G06F 17/153; G06N 3/084**

(86) International application number:
**PCT/US2022/071364**

(87) International publication number:
**WO 2022/204729 (29.09.2022 Gazette 2022/39)**

(54) **BROADCASTED RESIDUAL LEARNING**

RUNDFUNK-RESIDUALLERNEN

APPRENTISSAGE RÉSIDUEL DIFFUSÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2021 US 202163166161 P**

(43) Date of publication of application:
**07.02.2024 Bulletin 2024/06**

(73) Proprietor: **QUALCOMM INCORPORATED**
**San Diego, California 92121-1714 (US)**

(72) Inventors:
• **KIM, Byeonggeun**
  **San Diego, California 92121-1714 (US)**
• **CHANG, Simyung**
  **San Diego, California 92121-1714 (US)**
• **LEE, Jinkyu**
  **San Diego, California 92121-1714 (US)**
• **SUNG, Dooyong**
  **San Diego, California 92121-1714 (US)**

(74) Representative: **Klang, Alexander H.**
**Wagner & Geyer Partnerschaft mbB**
**Patent- und Rechtsanwälte**
**Gewürzmühlstrasse 5**
**80538 München (DE)**

(56) References cited:
• **SEUNGWOO CHOI ET AL: "Temporal
  Convolution for Real-time Keyword Spotting on
  Mobile Devices", ARXIV.ORG, CORNELL
  UNIVERSITY LIBRARY, 201 OLIN LIBRARY
  CORNELL UNIVERSITY ITHACA, NY 14853, 8
  April 2019 (2019-04-08), XP081166237**
• **DING RUNWEI ET AL: "Audio-Visual Keyword
  Spotting Based on Multidimensional
  Convolutional Neural Network", 2018 25TH IEEE
  INTERNATIONAL CONFERENCE ON IMAGE
  PROCESSING (ICIP), IEEE, 7 October 2018
  (2018-10-07), pages 4138 - 4142, XP033454671,
  DOI: 10.1109/ICIP.2018.8451096**
• **RAPHAEL TANG ET AL: "Deep Residual Learning
  for Small-Footprint Keyword Spotting",
  ARXIV.ORG, CORNELL UNIVERSITY LIBRARY,
  201 OLIN LIBRARY CORNELL UNIVERSITY
  ITHACA, NY 14853, 28 October 2017 (2017-10-28),
  XP081509130**

**Description**

**CROSS-REFERENCE TO RELATED APPLICATIONS**

This application claims priority to U.S. Patent Application No. 17/656,621, filed March 25, 2022, which claims the benefit of and priority to U.S. Provisional Patent Application No. 63/166,161, filed on March 25, 2021.

**INTRODUCTION**

Aspects of the present disclosure relate to machine learning, and more specifically, to efficient data processing.

Designing efficient machine learning architectures is an important topic in neural speech processing. In particular, keyword spotting (KWS), which aims to detect a predefined keyword, has become increasingly important. KWS plays a key role in device wake-up and user interaction on smart devices. However, it is challenging to provide models that minimize errors while also operating efficiently. Model efficiency is particularly important in KWS, as the process is typically performed in edge devices (e.g., in devices with limited resources such as mobile phones, smart speakers, and Internet of Things (IoT) devices) while simultaneously requiring low latency.

Accordingly, systems and methods are needed for providing high accuracy classifications with efficient model designs.

Attention is drawn to SEUNGWOO CHOI ET AL, "Temporal Convolution for Real-time Keyword Spotting on Mobile Devices", ARXIV.ORG, CORNELL UNIVERSITY LIBRARY, 201 OLIN LIBRARY CORNELL UNIVERSITY ITHACA, NY 14853, (20190408), XP081166237, relating to temporal convolution for real-time keyword spotting on mobile devices.

Further attention is drawn to DING RUNWEI ET AL, "Audio-Visual Keyword Spotting Based on Multidimensional Convolutional Neural Network", 2018 25TH IEEE INTERNATIONAL CONFERENCE ON IMAGE PROCESSING (ICIP), IEEE, (20181007), doi:10.1109/ICIP.2018.8451096, pages 4138 - 4142, XP033454671, relating to audio-visual keyword spotting based on a multidimensional convolutional neural network.

Additional attention is drawn to RAPHAEL TANG ET AL, "Deep Residual Learning for Small-Footprint Keyword Spotting", ARXIV.ORG, CORNELL UNIVERSITY LIBRARY, 201 OLIN LIBRARY CORNELL UNIVERSITY ITHACA, NY 14853, (20171028), XP081509130, relating to deep residual learning for small-footprint keyword spotting.

**BRIEF** SUMMARY

The invention is defined by the appended independent claims. Further embodiments are defined by the appended dependent claims. Certain aspects provide a method, comprising: receiving an input tensor comprising a frequency dimension and a temporal dimension; processing the input tensor with a first convolution operation to generate a multidimensional intermediate feature map comprising the frequency dimension and the temporal dimension; converting the multidimensional intermediate feature map to a one-dimensional intermediate feature map in the temporal dimension using a frequency dimension reduction operation; processing the one-dimensional intermediate feature map using a second convolution operation to generate a temporal feature map; expanding the temporal feature map to the frequency dimension using a broadcasting operation to generate a multidimensional output feature map; and augmenting the multidimensional output feature map with the multidimensional intermediate feature map via a first residual connection.

Other aspects provide processing systems configured to perform the aforementioned methods as well as those described herein; non-transitory, computer-readable media comprising instructions that, when executed by one or more processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more aspects.

**BRIEF DESCRIPTION OF THE DRAWINGS**

The appended figures depict certain aspects of the one or more aspects and are therefore not to be considered limiting of the scope of this disclosure.

**FIG. 1** depicts an example workflow for broadcasted residual learning.

**FIG. 2** depicts example block diagrams for residual learning techniques.

**FIG. 3** is an example broadcasted residual learning block for use in efficient processing of input data.

**FIG. 4** is an example broadcasted residual learning block for use in efficient processing of input data in a transitional layer.

**FIG. 5** is an example flow diagram illustrating a method for processing data using broadcasted residual learning.

**FIG. 6** depicts an example processing system configured to perform various aspects of the present disclosure.

To facilitate understanding, identical reference numerals have been used, where possible, to designate identical elements that are common to the drawings. It is contemplated that elements and features of one aspect may be beneficially incorporated in other aspects without further recitation.

## DETAILED DESCRIPTION

Aspects of the present disclosure provide techniques for broadcasted residual learning. The techniques described herein provide high model accuracy and significantly improved computational efficiency (e.g., a small model size and light computational load), as compared to existing approaches.

A wide variety of efficient convolutional neural networks (CNNs) have been developed recently. Generally, the CNNs are made up of repeated blocks of the same structure and are often based on residual learning and depthwise separable convolutions. This has resulted in a number of CNN-based KWS approaches. Existing approaches either use one-dimensional temporal convolutions or two-dimensional (e.g., frequency and temporal) convolutions. Each approach has respective benefits and drawbacks.

For example, for models using one-dimensional temporal convolution, less computing resources are typically needed, as compared to models relying on two-dimensional approaches. However, with one-dimensional convolution, the internal biases of the convolution (such as translation equivariance) cannot be obtained for the frequency dimension.

On the other hand, approaches based on two-dimensional convolution require significantly more computational resources than one-dimensional methods, even when using efficient designs and architectures such as depthwise separable convolution. This may prevent such two-dimensional approaches from being useful for a wide variety of devices and implementations.

The broadcasted residual learning techniques described herein can be used to efficiently process data, both during training (while training data is passed through the model) and during runtime (when new data is passed through to generate inferences).

According to the invention, broadcasted residual learning is used to process and classify audio data and features (e.g., to perform KWS). Generally, the audio data and features can be represented using two-dimensional tensors (e.g., with a frequency dimension and a temporal dimension). Although audio is used in examples herein, aspects of the present disclosure can be readily applied to a wide variety of data.

The broadcasted residual learning generally involves performing convolution on input tensors to extract two-dimensional features, reducing the dimensionality of the two-dimensional features to allow for efficient convolutions on the features (e.g., requiring reduced computations, processing steps, and energy), expanding the resulting tensors to the original dimensionality of the two-dimensional features, and augmenting the expanded tensors with the original two-dimensional features. In some aspects, the expanded tensors are further augmented with the original input tensor.

In some aspects, the broadcasted residual learning described herein can be performed in a neural network architecture to perform a variety of tasks, such as classifying input audio. For example, the techniques described herein can be implemented as broadcasted residual learning blocks, and a number of these blocks can be used in sequence within a neural network architecture.

Advantageously, the broadcasted residual learning retains many residual functions of one-dimensional temporal convolution, while still allowing two-dimensional convolution to be used together via a broadcasted-residual connection that expands temporal output to the frequency dimension. This residual mapping enables the network to effectively represent useful audio features with far less computation than conventional convolutional neural networks, which reduces computational complexity, latency, compute requirements, memory requirements, and the like. In aspects, the broadcasted residual learning techniques described herein can achieve state-of-the-art accuracy on speech command datasets using fewer computations and parameters, as compared to conventional systems.

*Example Workflow for Broadcasted Residual Learning*

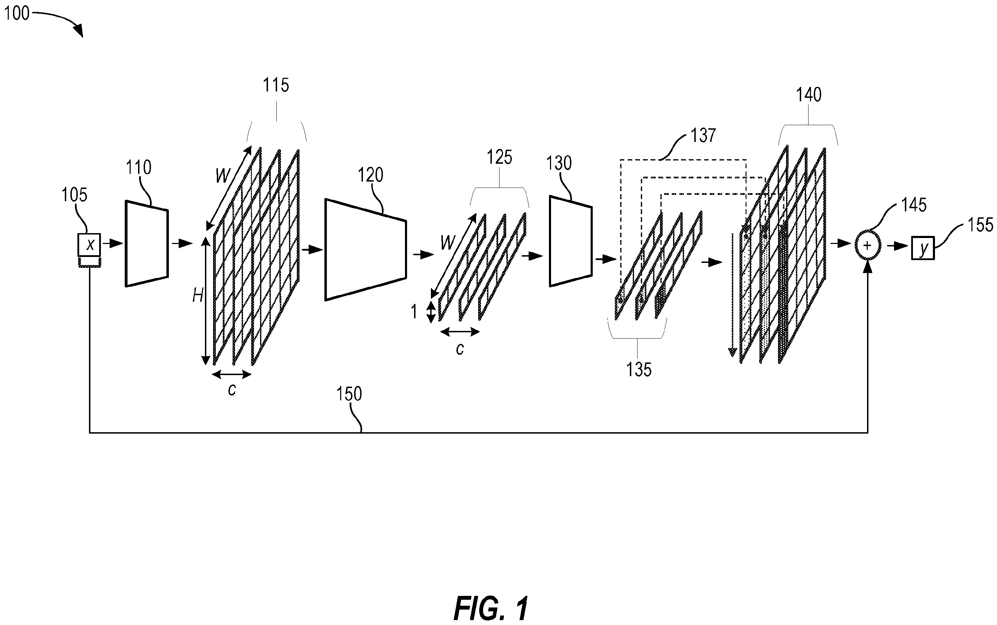

**FIG.** 1 depicts an example workflow 100 for broadcasted residual learning. The workflow 100 begins with an input tensor 105. In some examples, the tensor 105 may be audio data (e.g., represented by a log Mel spectrogram indicating a spectrum of frequencies over time), or audio features (e.g., features generated by processing audio data). In some aspects, the input tensor 105 is a two-dimensional tensor with a frequency dimension and a temporal dimension. The temporal dimension may be delineated into time intervals or steps, while the frequency dimension is delineated based on frequency values or bands. The frequencies present at each interval (e.g., the magnitude of sound at each frequency) can be reflected via the values in the tensor.

The input tensor 105 is processed using a first convolution operation 110, resulting in a set of two-dimensional features maps 115. As illustrated, the feature maps 115 have dimensionality $H \times W \times c$, where $H$ and $W$ are spatial dimensions (e.g., a temporal dimension and a frequency dimension, respectively) and c is the number of channels.

In one aspect, the convolution operation 110 is a depthwise convolution performed using one or more kernels configured to extract features of the frequency dimension. For example, the convolution operation 110 may use $n \times 1$ kernels, where $n$ corresponds to the frequency dimension. That is, the depthwise kernels for the convolution operation 110 may have a length greater than one in the frequency dimension, with a length of one in the temporal dimension. This allows the convolution operation 110 to serve as a frequency depthwise convolution that extracts frequency features (e.g., feature maps 115) for the tensor 105.

As illustrated, these feature maps 115 are two-dimensional (with a length greater than one in both the frequency dimension and the temporal dimension). In the illustrated workflow 100, a dimension reduction operation 120 is performed to reduce the dimensionality of the feature maps 115. Specifically, the dimension reduction operation 120 may reduce the feature maps 115 to eliminate the frequency dimension and preserve the temporal dimension. This results in one-dimensional feature maps 125. The feature maps 125 may have the same temporal dimensionality and number of channels as the feature maps 115, but with a length of one in the frequency dimension.

The dimension reduction operation 120 is generally performed on a per frequency (or a per frequency band) basis, and can include a variety of techniques, including maximum pooling (such that the maximum value, or the feature with the most activated presence, is retained), average pooling (such that the average value is retained), minimum pooling (such that the minimum value is retained), and the like. In some aspects, the dimension reduction operation 120 can also be performed by convolving the feature maps 115 using an $H \times 1$ kernel without padding in order to reduce the dimension, where H corresponds to the size of the frequency dimension.

Advantageously, the one-dimensional feature maps 125 (which correspond to the temporal dimension) can be convolved with significantly fewer computational resources, as compared to traditional two-dimensional convolution. This significantly improves the efficiency of the broadcasted residual learning.

As illustrated, the feature maps 125 are processed using a second convolution operation 130. In some aspects, the convolution operation 130 is a depthwise-separable convolution (e.g., a depthwise convolution followed by a pointwise convolution). In contrast to the convolution operation 110 (which corresponds to the frequency dimension), the convolution operation 130 may be performed using one or more kernels configured to extract features for the temporal dimension. For example, the convolution operation 130 may use $1 \times m$ kernels, where m corresponds to the temporal dimension.

That is, the depthwise kernels for the convolution operation 130 may have a length greater than one in the temporal dimension, with a length of one in the frequency dimension. This allows the convolution operation 130 to serve as a temporal depthwise convolution that extracts temporal features for the feature maps 125. In some aspects, the convolution operation 130 may be a depthwise separable convolution. In such an aspect, following the temporal depthwise convolution, the convolution operation 130 can apply one or more pointwise kernels. This results in feature maps 135.

In the workflow 100, the feature maps 135 are then broadcasted to the frequency dimension, as indicated by the arrows 137. This broadcasting operation (also referred to as an expanding operation) generally converts the one-dimensional feature maps 135 to multi-dimensional feature maps 140 with the same dimensionality as the feature maps 115. In some aspects, the broadcasting involves copying and stacking the feature maps 135 until they reach a height of $H$ (in this example).

The residual connection 150 reflects the residual nature of broadcasted residual learning. In the workflow 100, the input tensor 105 is augmented with the feature maps 140 using operation 145 to generate the output 155. In some aspects, the feature maps 140 may also or alternatively be augmented with the feature maps 115. This operation 145 may generally include any number of combination techniques, including element-wise summation, averaging, multiplication, and the like. Advantageously, the residual connection 150 allows the system to retain two-dimensional features of the input, despite the dimension reduction operation 120.

*Example Residual Learning Techniques*

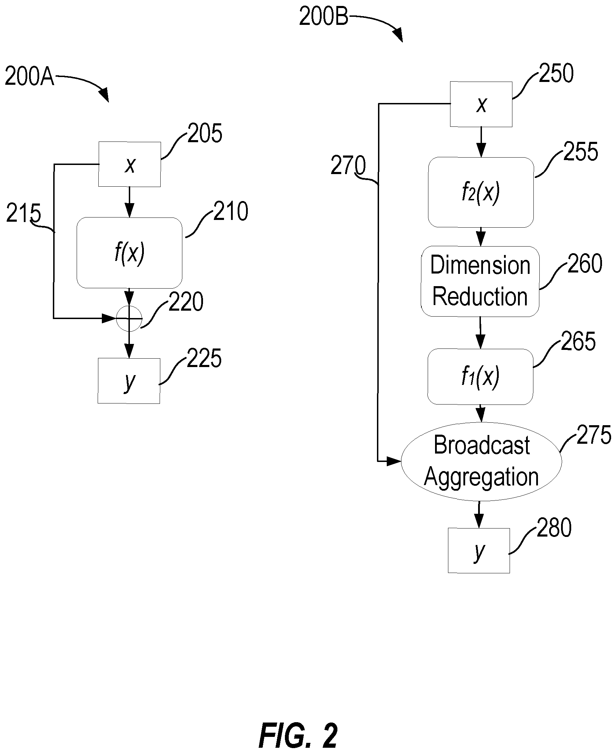

**FIG.** 2 depicts example block diagrams 200A and 200B for residual learning techniques.

Block 200A reflects a conventional residual block used in some residual models. This block 200A may be expressed as y = x + f(x), where x and y are input and output features, respectively, and function f(·) computes the convolution output. The identity shortcut of x and the result of f(x) are of the same dimensionality and can be summed by simple element-wise addition.

Specifically, as illustrated by the residual block 200A, the input 205 is processed using some convolution operation 210. The resulting tensor can then be summed with the original input 205 (via the identity shortcut 215), as indicated by operation 220. This yields the output 225 of the ordinary residual block 200A.

In aspects of the present disclosure, in order to utilize both one-dimensional and two-dimensional features together, the function $f(x)$ (reflected by convolution operation 210) may be decomposed into $f_1$ and $f_2$, which correspond to the temporal and two-dimensional operations, respectively. This is reflected in the broadcasted residual block 200B.

The broadcasted residual block 200B may be expressed as:

$$y = x + BC(f_1(reduction(f_2(x)))),$$

where x and y are input and output features, respectively, $f_1$ and $f_2$ are convolution operations, $BC(\cdot)$ is a broadcasting or expansion operation, and $reduction(\cdot)$ is a dimension reduction operation (e.g., average pooling by frequency dimension). In this equation, batch and channel dimensions are ignored for conceptual clarity, and the input feature x is in $\mathbb{R}^{H \times W}$, where *H and W* are the frequency and time steps, respectively.

As illustrated by the residual block 200B, input 250 is processed using a convolution operation 255 to extract two-dimensional features. The resulting tensor can then be reduced using dimension reduction 260, and the reduced tensor(s) are processed using the convolution operation 265 to extract temporal features. These features are then expanded to the frequency dimension and augmented with the original input 250 via the identity shortcut 270, resulting in output 280.

*Example Broadcasted Residual Learning Block*

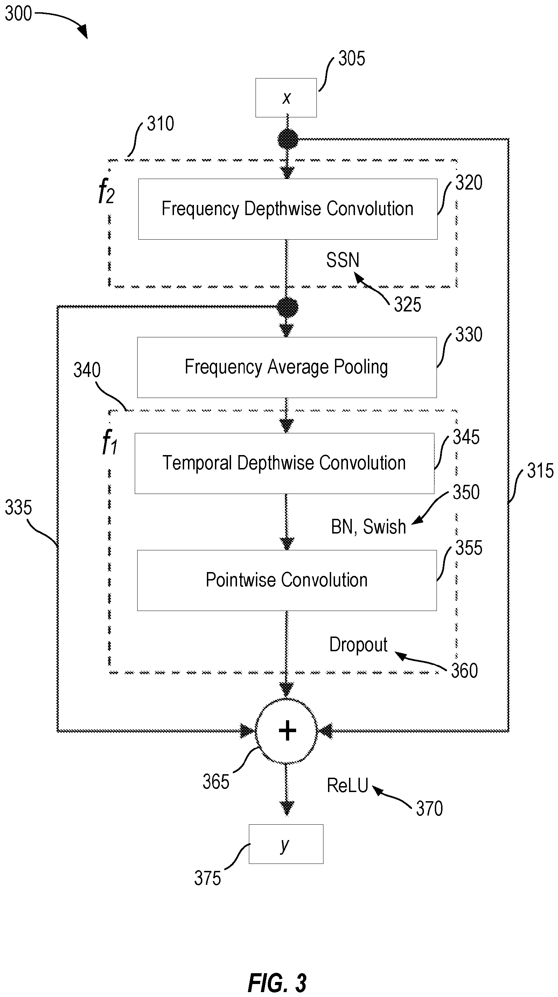

**FIG.** 3 is an example broadcasted residual learning block 300 for use in efficient processing of input data, such as audio input data.

As illustrated, an input tensor 305 is received and processed using a first operation 310 (labeled $f_2$ in FIG. 3). The operation 310 corresponds to the two-dimensional feature extraction discussed above (e.g., convolution operation 110), and yields two-dimensional feature maps in $\mathbb{R}^{H \times W}$ (e.g., feature maps 115 in FIG. 1). As illustrated, the convolution operation 310 is performed using a frequency depthwise convolution 320 that comprises one or more n $\times$ 1 frequency-depthwise convolution kernels.

As illustrated, the operation 310 also includes a SubSpectral Normalization (SSN) operation 325. The SSN operation 325 generally operates by splitting the input features (generated by the frequency depthwise convolution 320) into sub-bands in the frequency dimension, and separately normalizing each sub-band (e.g., with batch normalization). This allows the system to achieve frequency-aware temporal features, as compared to ordinary batch normalization on the entire feature set.

The system can then perform dimension reduction using operation 330. In the illustrated example, broadcasted residual learning block 300 uses frequency average pooling to average the input features by frequency, resulting in features in $\mathbb{R}^{1 \times W}$ as discussed above (e.g., feature maps 125 in FIG. 1).

These features are then processed using a second operation 340 (labeled $f_1$ in FIG. 3). The operation 320 may correspond to the temporal convolution operation discussed above (e.g., convolution operation 130). In one aspect, the operation 340 is a depthwise separable convolution (e.g., a composite of a temporal depthwise convolution 345 and a pointwise convolution 355).

The temporal depthwise convolution 345 may comprise one or more 1 $\times$ m temporal-depthwise convolution kernels to generate temporal features (e.g., feature maps 135 in FIG. 1).

As illustrated, the operation 340 then includes a batch normalization operation 350 followed by swish activation (also indicated by 350). Although swish activation is depicted in FIG. 3, in aspects, any suitable activation function can be used.

Following a pointwise convolution 355, the operation 340 can also include channel-wise dropout (indicated by 360) at a dropout rate p. This dropout can be used as regularization for the model in order to prevent overfitting and improve generalization. A broadcasting operation (which may correspond to the broadcasting operation 137 of FIG. 1),represented by operation 365 (which also includes the tensor augmentation discussed above with reference to operation 145 of FIG. 1) can then be used to expand the features from the operation 340 (in $\mathbb{R}^{1 \times W}$) to $\mathbb{R}^{H \times W}$.

In some aspects, to be frequency-convolution-aware over sequential blocks (e.g., sequential applications of the broadcasted residual learning block 300), the system uses not only the residual connection 315 (sometimes referred to as the "identity shortcut") to augment the features with the original input 305 (at operation 365), but also uses an auxiliary residual connection 335 from the two-dimensional features output by the frequency depthwise convolution 320 (at operation 365). This auxiliary residual connection 335 enables the system to retain frequency-aware features of the input, despite the dimension reduction operation. The output of this broadcasting and augmentation operation 365 (also referred to as a broadcast sum operation in some aspects) can then be processed using one or more activation functions (e.g., ReLU function 370), and then provided as output 375 from the residual learning block 300.

In this way, the broadcasted residual learning block 300 can be expressed as $y = x + f_2(x) + BC(f_1(reduction(f_2(x))))$, where x and y are input and output features, respectively, $f_1$ and $f_2$ are convolution operations, $BC(\cdot)$ is a broadcasting or expansion operation, and $reduction(\cdot)$ is a dimension reduction operation (e.g., average pooling by frequency dimension).

Using the broadcasted residual learning block 300, machine learning models can provide, for example, more efficient KWS as compared to conventional techniques while retaining two-dimensional features. By performing the temporal depthwise and the pointwise convolutions on one-dimensional temporal features, the computational load is reduced by a factor of the frequency steps H (often forty or more), as compared to traditional two-dimensional depthwise separable convolutions.

*Example Transitional Broadcasted Residual Learning Block*

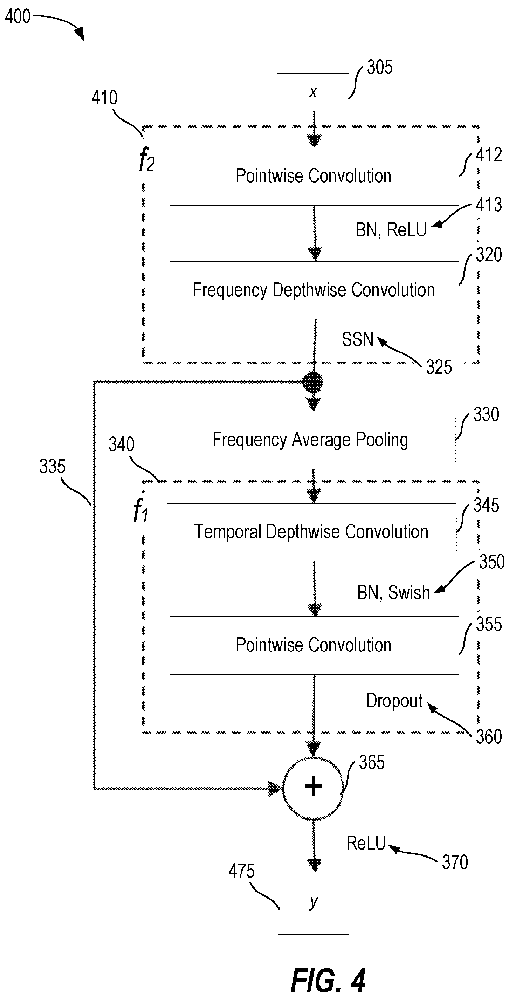

FIG. 4 is an example transition broadcasted residual learning block 400 for use in efficient processing of input data, such as audio input data.

The transition broadcasted residual learning block 400 is similar to the normal broadcasted residual learning block 300, with two differences that enable the transition broadcasted residual learning block 400 to be used in transitional layers where the number of channels in the input 305 differ from the number of channels in the output 475.

Specifically, the operation 410 replaces the operation 310 in FIG. 3. The operation 410 includes an additional pointwise convolution 412, which is used to change the number of channels in the input 405 to the desired number of channels for the output 475. As illustrated, this pointwise convolution 412 may be followed with batch normalization and an activation function (such as ReLU), indicated by 413.

The second difference between the transition broadcasted residual learning block 400 and the normal broadcasted residual learning block 300 is that the transition broadcasted residual learning block 400 does not include the identity shortcut (residual connection 315 in FIG. 3). That is, the transition broadcasted residual learning block 400 does not augment the output using the input 405 (because the dimensionality differs).

In other respects, the transition broadcasted residual learning block 400 largely mirrors the normal broadcasted residual learning block 300 described above with reference to FIG. 3.

*Example Method for Broadcasted Residual Learning*

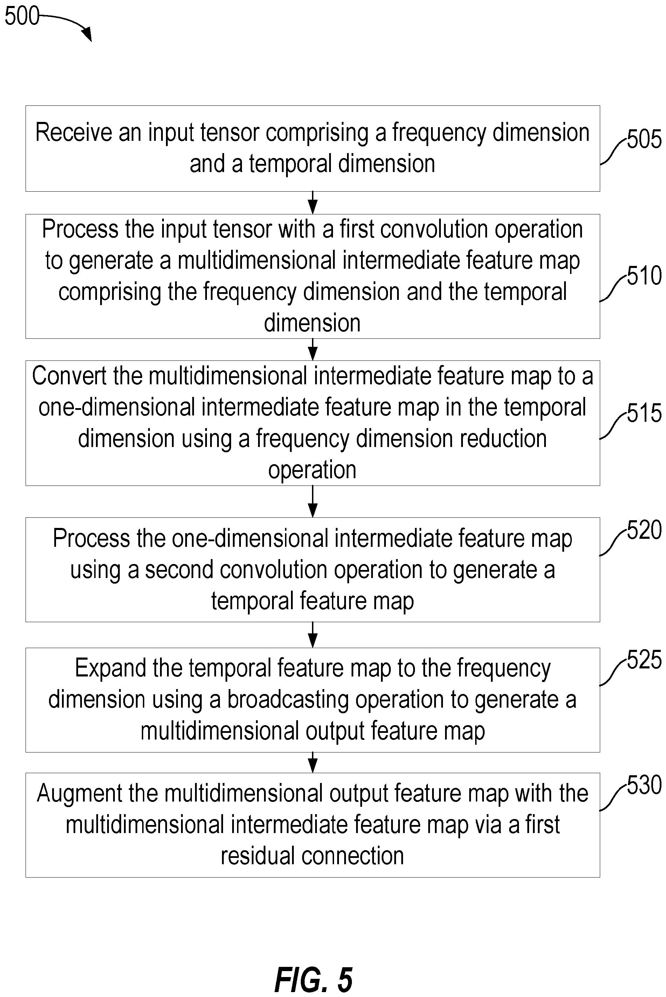

FIG. 5 is an example flow diagram illustrating a method 500 for processing data using broadcasted residual learning.

The method 500 begins at block 505, where a processing system receives an input tensor comprising a frequency dimension and a temporal dimension.

At block 510, the processing system processes the input tensor with a first convolution operation to generate a multidimensional intermediate feature map comprising the frequency dimension and the temporal dimension. In some cases, the multidimensional intermediate feature map is a two-dimensional intermediate feature map.

In some aspects, the first convolution operation uses one or more depthwise convolution kernels with a size greater than one in the frequency dimension and equal to one in the temporal dimension.

In some aspects, the input tensor is output from a pointwise convolution operation configured to change a number of channels in the input tensor.

At block 515, the processing system converts the multidimensional intermediate feature map to a one-dimensional intermediate feature map in the temporal dimension using a frequency dimension reduction operation.

In some aspects, the frequency dimension reduction operation comprises at least one of a maximum pooling operation, an average pooling operation, or a convolution operation.

In some aspects, the method 500 further comprises performing a subspectral normalization (SSN) operation on the multidimensional intermediate feature map prior to converting the multidimensional intermediate feature map to a one-dimensional intermediate feature map.

In some aspects, wherein the SSN operation comprises: dividing the multidimensional intermediate feature map into a plurality of sub-bands in the frequency dimension; and performing batch normalization on each sub band of the plurality of sub-bands.

At block 520, the processing system processes the one-dimensional intermediate feature map using a second convolution operation to generate a temporal feature map.

In some aspects, the second convolution operation comprises a depthwise separable convolution operation, wherein a depthwise convolution of the depthwise separable convolution operation is configured to use one or more depthwise convolution kernels with a size equal to one in the frequency dimension and greater than one in the temporal dimension.

In some aspects, a pointwise convolution of the depthwise separable convolution operation is configured to use one or more pointwise convolution kernels subsequent to the depthwise convolution.

At block 525, the processing system expands the temporal feature map to the frequency dimension using a broadcasting operation to generate a multidimensional output feature map.

At block 530, the processing system augments the multidimensional output feature map with the multidimensional intermediate feature map via a first residual connection.

In some aspects, the method 500 further includes outputting the augmented multidimensional output (e.g., as output from a residual block to another residual block or other block or layer of a model, as output from the mode, and the like).

In some aspects, the method 500 further comprises augmenting the multidimensional output feature map with the input tensor via a second residual connection.

In some aspects, the input tensor comprises input audio features; and the first and second convolution operations are part of a broadcast residual neural network configured to classify the input audio features.

*Example Processing System for Broadcasted Residual Learning*

In some aspects, the techniques, methods, and workflows described with respect to **FIGS. 1-5** may be performed on one or more devices.

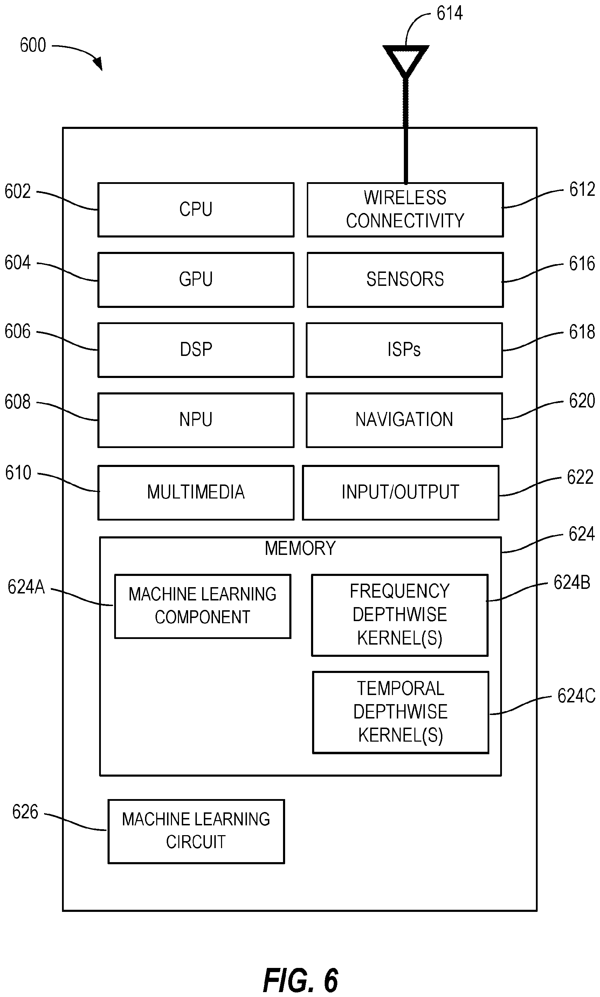

FIG. 6 depicts an example processing system 600 which may be configured to perform aspects of the various methods described herein, including, for example, the methods described with respect to **FIGS. 1-5.**

Processing system 600 includes a central processing unit (CPU) 602, which in some examples may be a multi-core CPU. Instructions executed at the CPU 602 may be loaded, for example, from a program memory associated with the CPU 602 or may be loaded from a memory partition 624.

Processing system 600 also includes additional processing components tailored to specific functions, such as a graphics processing unit (GPU) 604, a digital signal processor (DSP) 606, a neural processing unit (NPU) 608, a multimedia processing unit 610, and a wireless connectivity component 612.

An NPU, such as 608, is generally a specialized circuit configured for implementing all the necessary control and arithmetic logic for executing machine learning algorithms, such as algorithms for processing artificial neural networks (ANNs), deep neural networks (DNNs), random forests (RFs), and the like. An NPU may sometimes alternatively be referred to as a neural signal processor (NSP), tensor processing units (TPU), neural network processor (NNP), intelligence processing unit (IPU), vision processing unit (VPU), or graph processing unit.

NPUs, such as 608, are configured to accelerate the performance of common machine learning tasks, such as image classification, machine translation, object detection, and various other predictive models. In some examples, a plurality of NPUs may be instantiated on a single chip, such as a system on a chip (SoC), while in other examples they may be part of a dedicated neural-network accelerator.

NPUs may be optimized for training or inference, or in some cases configured to balance performance between both. For NPUs that are capable of performing both training and inference, the two tasks may still generally be performed independently.

NPUs designed to accelerate training are generally configured to accelerate the optimization of new models, which is a highly compute-intensive operation that involves inputting an existing dataset (often labeled or tagged), iterating over the dataset, and then adjusting model parameters, such as weights and biases, in order to improve model performance. Generally, optimizing based on a wrong prediction involves propagating back through the layers of the model and determining gradients to reduce the prediction error.

NPUs designed to accelerate inference are generally configured to operate on complete models.

Such NPUs may thus be configured to input a new piece of data and rapidly process it through an already trained model to generate a model output (e.g., an inference).

In one implementation, NPU 608 is a part of one or more of CPU 602, GPU 604, and/or DSP 606.

In some examples, wireless connectivity component 612 may include subcomponents, for example, for third generation (3G) connectivity, fourth generation (4G) connectivity (e.g., 4G LTE), fifth generation connectivity (e.g., 5G or NR), Wi-Fi connectivity, Bluetooth connectivity, and other wireless data transmission standards. Wireless connectivity processing component 612 is further connected to one or more antennas 614.

Processing system 600 may also include one or more sensor processing units 616 associated with any manner of sensor, one or more image signal processors (ISPs) 618 associated with any manner of image sensor, and/or a navigation processor 620, which may include satellite-based positioning system components (e.g., GPS or GLONASS) as well as inertial positioning system components.

Processing system 600 may also include one or more input and/or output devices 622, such as screens, touch-sensitive surfaces (including touch-sensitive displays), physical buttons, speakers, microphones, and the like.

In some examples, one or more of the processors of processing system 600 may be based on an ARM or RISC-V instruction set.

Processing system 600 also includes memory 624, which is representative of one or more static and/or dynamic memories, such as a dynamic random access memory, a flash-based static memory, and the like. In this example, memory 624 includes computer-executable components, which may be executed by one or more of the aforementioned processors of processing system 600.

In particular, in this example, memory 624 includes machine learning component 624A, which may be configured according to one or more aspects described herein. For example, the machine learning component 624A may provide data or audio analysis using one or more machine learning models (e.g., neural networks) configured with one or more broadcasted residual learning blocks.

The memory 624 further includes a set of frequency depthwise kernel(s) 624B and a set of temporal depthwise kernel(s) 624C. As discussed above, the frequency depthwise kernels 624B generally include one-dimensional kernels with a length greater than one in the frequency dimension, while temporal depthwise kernels 624C include one-dimensional kernels with a length greater than one in the temporal dimension.

The frequency depthwise kernels 624B can generally be used to perform frequency depthwise convolution (e.g., convolution operation 110 in **FIG. 1),** while the temporal depthwise kernels 624C are generally used to perform temporal depthwise convolution (e.g., convolution operation 130 in **FIG. 1).**

Processing system 600 further comprises machine learning circuit 626, such as described above, for example, with respect to **FIGS. 1-5.**

Though depicted as a separate circuit for clarity in **FIG. 6,** the machine learning circuit 626 may be implemented in other processing devices of processing system 600, such as within CPU 602, GPU 604, DSP 606, NPU 608, and the like.

Generally, processing system 600 and/or components thereof may be configured to perform the methods described herein.

Notably, in other aspects, aspects of processing system 600 may be omitted, such as where processing system 600 is a server computer or the like. For example, multimedia component 610, wireless connectivity 612, sensors 616, ISPs 618, and/or navigation component 620 may be omitted in other aspects. Further, aspects of processing system 600 maybe distributed between multiple devices.

The depicted components, and others not depicted, may be configured to perform various aspects of the methods described herein.

*Additional Considerations*

The preceding description is provided to enable any person skilled in the art to practice the various aspects described herein. The examples discussed herein are not limiting of the scope, applicability, or aspects set forth in the claims. Various modifications to these aspects will be readily apparent to those skilled in the art, and the generic principles defined herein may be applied to other aspects. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, the term "connected to", in the context of sharing electronic signals and data between the elements described herein, may generally mean in data communication between the respective elements that are connected to each other. In some cases, elements may be directly connected to each other, such as via one or more conductive traces, lines, or other conductive carriers capable of carrying signals and/or data between the respective elements that are directly connected to each other. In other cases, elements may be indirectly connected to each other, such as via one or more data busses or similar shared circuitry and/or integrated circuit elements for communicating signals and data between the respective elements that are indirectly connected to each other.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the aspects shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more.

**Claims**

1.   A computer-implemented method, comprising:

   receiving (505) an input tensor (105) comprising a frequency dimension and a temporal dimension, wherein the input tensor comprises input audio data or input audio features;

processing (510) the input tensor with a first convolution operation (110) to generate a multidimensional intermediate feature map (115) comprising the frequency dimension and the temporal dimension;

converting (515) the multidimensional intermediate feature map to a one-dimensional intermediate feature map (125) in the temporal dimension using a frequency dimension reduction operation (120);

processing (520) the one-dimensional intermediate feature map using a second convolution operation (130) to generate a temporal feature map (135), wherein the first and second convolution operations are part of a broadcast residual neural network configured to classify the input audio data or features,

wherein the broadcast residual neural network comprises a broadcasting operation (137) for converting the temporal feature map (135) to a multidimensional output feature map (140);

expanding (525) the temporal feature map to the frequency dimension using the broadcasting operation to generate the multidimensional output feature map (140);

augmenting (530) the multidimensional output feature map with the multidimensional intermediate feature map via a first residual connection (150); and

outputting the augmented multidimensional output feature map.

2. The computer-implemented method of Claim 1, wherein the multidimensional intermediate feature map is a two-dimensional intermediate feature map, and wherein converting the multidimensional intermediate feature map to the one-dimensional intermediate feature map reduces a number of computations performed by a processor when generating the temporal feature map.

3. The computer-implemented method of Claim 1, further comprising augmenting the multidimensional output feature map with the input tensor via a second residual connection.

4. The computer-implemented method of Claim 1, wherein the first convolution operation uses one or more depthwise convolution kernels with a size greater than one in the frequency dimension and equal to one in the temporal dimension.

5. The computer-implemented method of Claim 4, wherein the input tensor is output from a pointwise convolution operation configured to change a number of channels in the input tensor.

6. The computer-implemented method of Claim 1, further comprising performing a subspectral normalization, SSN, operation on the multidimensional intermediate feature map prior to converting the multidimensional intermediate feature map to a one-dimensional intermediate feature map.

7. The computer-implemented method of Claim 6, wherein the SSN operation comprises:

dividing the multidimensional intermediate feature map into a plurality of sub-bands in the frequency dimension; and
performing batch normalization on each sub band of the plurality of sub-bands.

8. The computer-implemented method of Claim 1, wherein the frequency dimension reduction operation comprises at least one of a maximum pooling operation, an average pooling operation, or a convolution operation.

9. The computer-implemented method of Claim 1, wherein the second convolution operation comprises a depthwise separable convolution operation, wherein a depthwise convolution of the depthwise separable convolution operation is configured to use one or more depthwise convolution kernels with a size equal to one in the frequency dimension and greater than one in the temporal dimension.

10. The computer-implemented method of Claim 9, wherein a pointwise convolution of the depthwise separable convolution operation is configured to use one or more pointwise convolution kernels subsequent to the depthwise convolution.

11. A non-transitory computer-readable medium comprising computer-executable instructions that, when executed by one or more processors of a processing system, cause the processing system to perform the method of any of claims 1-10.

12. A processing system (600), comprising:

a memory (624) comprising computer-executable instructions;
one or more processors (602, 604, 606, 608) configured to execute the computer-executable instructions and cause the processing system to perform the method of any of claims 1-10.

**Patentansprüche**

1. Ein computerimplementiertes Verfahren, das Folgendes aufweist:

Empfangen (505) eines Eingangstensors (105), der eine Frequenzdimension und eine zeitliche Dimension aufweist, wobei der Eingangstensor Eingangsaudiodaten oder Eingangsaudiomerkmale aufweist;

Verarbeiten (510) des Eingangstensors mit einer Faltungsoperation (110) zum Generieren einer mehrdimensionalen intermediären Merkmalsabbildung bzw. Feature-Map (115), die die Frequenzdimension und die zeitliche Dimension aufweist;

Wandeln (515) der mehrdimensionalen intermediären Merkmalsabbildung in eine eindimensionale intermediären Merkmalsabbildung (125) in der zeitlichen Dimension unter Nutzung einer Frequenzdimensionsreduktionsoperation (120);

Verarbeiten (520) der eindimensionalen intermediären Merkmalsabbildung unter Nutzung einer zweiten Faltungsoperation (130) zum Generieren einer zeitlichen Merkmalsabbildung (135), wobei die ersten und zweiten Faltungsoperationen Teil eines Broadcast-Residual-Neuronal-Netzwerks zum Klassifizieren von Eingangsaudiodaten oder -merkmalen sind, wobei das Broadcast-Residual-Neuronal-Netzwerk eine Broadcast-Operation (137) zum Wandeln der Zeitmerkmalsabbildung (135) in eine multidimensionale Ausgangsmerkmalsabbildung (140) aufweist;

Expandieren (525) der Zeitmerkmalsabbildung in die Frequenzdimension unter Nutzung der Broadcasting-Operation zum Generieren der mehrdimensionalen Ausgangsmerkmalsabbildung (140);

Erweitern (530) der mehrdimensionalen Ausgangsmerkmalsabbildung mit der mehrdimensionalen intermediären Merkmalsabbildung über eine erste Residualverbindung (150); und

Ausgeben der erweiterten multidimensionalen Ausgangsmerkmalsabbildung.

2. Computerimplementiertes Verfahren nach Anspruch 1, wobei die mehrdimensionale intermediäre Merkmalsabbildung eine zweidimensionale intermediäre Merkmalsabbildung ist, und wobei Wandeln der multidimensionalen intermediären Merkmalsabbildung in die eindimensionale intermediären Merkmalsabbildung eine Anzahl von Berechnungen reduziert, die durch einen Prozessor beim Generieren der zeitlichen Merkmalsabbildung durchgeführt werden.

3. Computerimplementiertes Verfahren nach Anspruch 1, das weiter Erweitern der mehrdimensionalen Ausgangsmerkmalsabbildung mit dem Eingangstensor über eine zweite Residualverbindung aufweist.

4. Computerimplementiertes Verfahren nach Anspruch 1, wobei die erste Faltungsoperation einen oder mehrere Kernel zur Faltung hinsichtlich der Tiefe mit einer Größe nutzt, die größer ist als eine Größe in der Frequenzdimension und gleich ist zu einer Größe in der zeitlichen Dimension.

5. Computerimplementiertes Verfahren nach Anspruch 4, wobei der Eingangstensor aus einer Operation zur Faltung hinsichtlich eines Punktes ausgegeben wird, die konfiguriert ist zum Ändern einer Anzahl von Kanälen in dem Eingangstensor.

6. Computerimplementiertes Verfahren nach Anspruch 1, das weiter Durchführen einer Operation einer subspektralen Normalisierung bzw. SNN-Operation (SNN = subspectral normalization) an der mehrdimensionalen intermediären Merkmalsabbildung vor Wandeln der mehrdimensionalen intermediären Merkmalsabbildung in eine eindimensionale intermediären Merkmalsabbildung aufweist.

7. Computerimplementiertes Verfahren nach Anspruch 6, wobei die SNN-Operation Folgendes aufweist:

Teilen der mehrdimensionalen intermediären Merkmalsabbildung in eine Vielzahl von Subbändern in der Frequenzdimension; und
Durchführen von Batch- bzw. Stapelnormalisierung an jedem Subband der Vielzahl von Subbändern.

8. Computerimplementiertes Verfahren nach Anspruch 1, wobei die Frequenzdimensionsreduktionsoperation wenigstens eines von einer Maximum-Pooling-Operation, einer Durchschnitts-Pooling-Operation oder einer Faltungsoperation aufweist.

9. Computerimplementiertes Verfahren nach Anspruch 1, wobei die zweite Faltungsoperation eine hinsichtlich der Tiefe separierbare Faltungsoperation aufweist, wobei eine Faltung hinsichtlich der hinsichtlich der Tiefe separierbaren Faltungsoperation konfiguriert ist zum Nutzen von einem oder mehreren Kerneln zur Faltung hinsichtlich der Tiefe mit einer Größe, die gleich ist zu einer Größe in der Frequenzdimension und größer ist als eine Größe in der zeitlichen Dimension.

10. Computerimplementiertes Verfahren nach Anspruch 9, wobei eine Faltung hinsichtlich eines Punktes der hinsichtlich der Tiefe separierbaren Faltungsoperation konfiguriert ist einen oder mehrere Kernen zur Faltung hinsichtlich eines Punktes zu nutzen, und zwar nachfolgend auf die Faltung hinsichtlich der Tiefe.

**11.** Ein nicht transitorisches computerlesbares Medium, das von einem Computer ausführbare Instruktionen aufweist, die, wenn sie durch einen oder mehrere Prozessoren eines Verarbeitungssystems ausgeführt werden, das Verarbeitungssystem veranlassen zum Durchführen des Verfahrens nach einem der Ansprüche 1-10.

**12.** Ein Verarbeitungssystem (600), das Folgendes aufweist:

einen Speicher (624), der von einem Computer ausführbare Instruktionen aufweist;
einen oder mehrere Prozessoren (602, 604, 606, 608), die konfiguriert sind zum Ausführen der von einem Computer ausführbaren Instruktionen und zum Veranlassen des Verarbeitungssystems zum Durchführen des Verfahrens nach einem der Ansprüche 1-10.

**Revendications**

**1.** Procédé mis en œuvre par ordinateur, comprenant :

la réception (505) d'un tenseur d'entrée (105) comprenant une dimension de fréquence et une dimension temporelle, dans lequel le tenseur d'entrée comprend des données audio d'entrée ou des caractéristiques audio d'entrée ;
le traitement (510) du tenseur d'entrée avec une première opération de convolution (110) pour générer une carte de caractéristiques intermédiaires multidimensionnelle (115) comprenant la dimension de fréquence et la dimension temporelle ;
la conversion (515) de la carte des caractéristiques intermédiaires multidimensionnelle en une carte de caractéristiques intermédiaires unidimensionnelle (125) dans la dimension temporelle en utilisant une opération de réduction de dimension de fréquence (120) ;
le traitement (520) de la carte des caractéristiques intermédiaires unidimensionnelle en utilisant une deuxième opération de convolution (130) pour générer une carte de caractéristiques temporelles (135), dans lequel les première et deuxième opérations de convolution font partie d'un réseau neuronal résiduel de diffusion configuré pour classer les données ou caractéristiques audio d'entrée ;
dans lequel le réseau neuronal résiduel de diffusion comprend une opération de diffusion (137) pour convertir la carte des caractéristiques temporelles (135) en une carte de caractéristiques de sortie multidimensionnelle (140) ;
l'extension (525) de la carte des caractéristiques temporelles à la dimension de fréquence en utilisant l'opération de diffusion pour générer la carte des caractéristiques de sortie multidimensionnelle (140) ;
l'augmentation (530) de la carte des caractéristiques de sortie multidimensionnelle avec la carte des caractéristiques intermédiaires multidimensionnelle par l'intermédiaire d'une première connexion résiduelle (150) ; et
la sortie de la carte des caractéristiques de sortie multidimensionnelle augmentée.

**2.** Procédé mis en œuvre par ordinateur selon la revendication 1, dans lequel la carte des caractéristiques intermédiaires multidimensionnelle est une carte de caractéristiques intermédiaires bidimensionnelle, et dans lequel la conversion de la carte des caractéristiques intermédiaires multidimensionnelle en une carte de caractéristiques intermédiaires unidimensionnelle réduit un nombre de calculs effectués par un processeur pendant la génération de la carte des caractéristiques temporelles.

**3.** Procédé mis en œuvre par ordinateur selon la revendication 1, comprenant en outre l'augmentation de la carte des caractéristiques de sortie multidimensionnelle avec le tenseur d'entrée par l'intermédiaire d'une deuxième connexion résiduelle.

**4.** Procédé mis en œuvre par ordinateur selon la revendication 1, dans lequel la première opération de convolution utilise un ou plusieurs noyaux de convolution en profondeur avec une taille supérieure à un dans la dimension de fréquence et égale à un dans la dimension temporelle.

**5.** Procédé mis en œuvre par ordinateur selon la revendication 4, dans lequel le tenseur d'entrée résulte d'une opération de convolution ponctuelle configurée pour modifier un certain nombre de canaux dans le tenseur d'entrée.

**6.** Procédé mis en œuvre par ordinateur selon la revendication 1, comprenant en outre la mise en œuvre d'une opération de normalisation sous-spectrale, SSN, sur la carte des caractéristiques intermédiaires multidimensionnelle avant de convertir la carte des caractéristiques intermédiaires multidimensionnelle en une carte de caractéristiques intermédiaires unidimensionnelle.

**7.** Procédé mis en œuvre par ordinateur selon la revendication 6, dans lequel l'opération SSN comprend :

la division de la carte des caractéristiques intermédiaires multidimensionnelle en une pluralité de sous-bandes dans la dimension de fréquence ; et

la mise en œuvre d'une normalisation par lots sur chaque sous-bande de la pluralité de sous-bandes.

8.  Procédé mis en œuvre par ordinateur selon la revendication 1, dans lequel l'opération de réduction de dimension de fréquence comprend au moins une opération parmi une opération de regroupement maximal, une opération de regroupement moyen ou une opération de convolution.

9.  Procédé mis en œuvre par ordinateur selon la revendication 1, dans lequel la deuxième opération de convolution comprend une opération de convolution séparable en profondeur, dans lequel une convolution en profondeur de l'opération de convolution séparable en profondeur est configurée pour utiliser un ou plusieurs noyaux de convolution en profondeur avec une taille égale à un dans la dimension de fréquence et supérieure à un dans la dimension temporelle.

10. Procédé mis en œuvre par ordinateur selon la revendication 9, dans lequel une convolution ponctuelle de l'opération de convolution séparable en profondeur est configurée pour utiliser un ou plusieurs noyaux de convolution ponctuelle après la convolution en profondeur.

11. Support non transitoire lisible par ordinateur comprenant des instructions exécutables par ordinateur qui, lorsqu'elles sont exécutées par un ou plusieurs processeurs d'un système de traitement, amènent le système de traitement à mettre en œuvre le procédé selon l'une quelconque des revendications 1 à 10.

12. Système de traitement (600), comprenant :

une mémoire (624) comprenant des instructions exécutables par ordinateur ;
un ou plusieurs processeurs (602, 604, 606, 608) configurés pour exécuter les instructions exécutables par ordinateur et amener le système de traitement à mettre en œuvre le procédé selon l'une quelconque des revendications 1 à 10.

FIG. 1

EP 4 315 167 B1

**FIG. 2**

300

305

x

310

$f_2$

320

Frequency Depthwise Convolution

SSN

325

330

Frequency Average Pooling

340

$f_1$

345

Temporal Depthwise Convolution

350

BN, Swish

315

335

355

Pointwise Convolution

Dropout

360

365

+

ReLU

370

y

375

**FIG. 3**

400

305

x

410

$f_2$

412
Pointwise Convolution

413
BN, ReLU

320
Frequency Depthwise Convolution

SSN

325

330
Frequency Average Pooling

340

335

$f_1$

345
Temporal Depthwise Convolution

350
BN, Swish

355
Pointwise Convolution

Dropout

360

365
+

ReLU

370

475

y

*FIG. 4*

500

Receive an input tensor comprising a frequency dimension and a temporal dimension ⟋505

Process the input tensor with a first convolution operation to generate a multidimensional intermediate feature map comprising the frequency dimension and the temporal dimension ⟋510

Convert the multidimensional intermediate feature map to a one-dimensional intermediate feature map in the temporal dimension using a frequency dimension reduction operation ⟋515

Process the one-dimensional intermediate feature map using a second convolution operation to generate a temporal feature map ⟋520

Expand the temporal feature map to the frequency dimension using a broadcasting operation to generate a multidimensional output feature map ⟋525

Augment the multidimensional output feature map with the multidimensional intermediate feature map via a first residual connection ⟋530

*FIG. 5*

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 65662122
- US 63166161

**Non-patent literature cited in the description**

- Temporal Convolution for Real-time Keyword Spotting on Mobile Devices. **SEUNGWOO CHOI et al.** ARXIV.ORG. CORNELL UNIVERSITY LIBRARY, 201 OLIN LIBRARY CORNELL UNIVERSITY, 08 April 2019
- Audio-Visual Keyword Spotting Based on Multi-dimensional Convolutional Neural Network. **DING RUNWEI et al.** 2018 25TH IEEE INTERNATIONAL CONFERENCE ON IMAGE PROCESSING (ICIP). IEEE, 07 October 2018, 4138-4142
- Deep Residual Learning for Small-Footprint Keyword Spotting. **RAPHAEL TANG et al.** ARXIV.ORG. CORNELL UNIVERSITY LIBRARY, 201 OLIN LIBRARY CORNELL UNIVERSITY, 28 October 2017